# EUROPEAN PATENT SPECIFICATION

(11) **EP 0 708 066 B1**
(45) Date of publication and mention of the grant of the patent: **11.08.1999**
(21) Application number: 95307051.3
(22) Date of filing: 04.10.1995
(51) Int. Cl.: C04B 35/48, C04B 35/50, C01G 27/00, C04B 35/64

(54) **Method for preparing composite oxide having oxygen absorbing and desorbing capability**
Verfahren zur Herstellung eines Verbundoxides mit sauerstoffabsorbierender und -desorbierender Fähigkeit
Procédé pour la préparation d'un matériau oxide composite ayant la capacité d'absorption et de désorption de l'oxygène

(30) Priority: 05.10.1994 JP 24166294
(43) Date of publication of application: 24.04.1996
(73) Proprietor: SANTOKU METAL INDUSTRY CO., LTD., Kobe-shi, Hyogo-ken (JP)
(72) Inventor: Yao, Shinya, Suita-shi, Osaka-fu (JP); Yokoi, Hideo, Sanda-shi, Hyogo-ken (JP)
(74) Representative: Hallybone, Huw George

(56) References cited:
- EP-A- 0 226 438
- EP-A- 0 588 691
- US-A- 4 568 650
- DATABASE WPI Week 9208 Derwent Publications Ltd., London, GB; AN 92-060010 & JP-A-04 004 043 (NISSAN MOTOR) , 8 January 1992
- PATENT ABSTRACTS OF JAPAN vol. 018, no. 357 (C-1221) & JP-A-06 092 638 (OSAKA CEMENT CO.,LTD.) 05 April 1994
- DATABASE WPI Week 8333 Derwent Publications Ltd., London, GB; AN 83-737855 & JP-A-58 114 730 (TOKUYAMA SODA) , 8 July 1983
- BROOK (ED.): "Concise Encyclopedia of Advanced Ceramic Materials" , , PERGAMON PRESS,

## Description

The present invention relates to a method for preparing a composite oxide having especially excellent oxygen absorbing and desorbing capability which is utilizable for a catalyst for purifying exhaust gases and for functional ceramics.

Cerium oxide has hitherto been employed in large quantities as catalysts for purifying exhaust gas and as ceramics. For example, in the field of catalysts, cerium oxide is used for enhancing the purification rate of exhaust gas components such as hydrocarbons, carbon monoxide and NOx, taking advantage of its characteristic properties of absorbing oxygen in an oxidizing atmosphere and desorbing oxygen in a reducing atmosphere. In the field of ceramics, cerium oxide is used in the form of compounds or mixtures with other elements as electrically conductive ceramics, such as solid electrolytes, taking advantage of its characteristic properties mentioned above. Such cerium oxide heretofore known is usually prepared, for example by adding oxalic acid or ammonium bicarbonate to a solution of nitrate or chloride of cerium, filtering and washing the resultant precipitate, followed by drying and calcining.

However, the conventional composite oxide predominantly composed of cerium oxide prepared according to the above method, though it exhibits oxygen absorbing and desorbing capability, has a drawback in that it is incapable of sufficiently absorbing and desorbing oxgen at 400 to 700 °C, and is deteriorated in performance after heating to a higher temperature.

Up to now, a cerium-zirconium composite oxide having high oxygen absorbing and desorbing capability is known and disclosed in Japanese Laid-open Patent Publication No. 5-105428 (1993), but development of a composite oxide exhibiting even more excellent oxygen absorbing and desorbing capability has still been desired.

US-A-4568650 describes a method of reoxidising a partially reduced ceramic, such as a ZrO₂ - Y₂O₃ ceramic. The reoxidation is carried out by heating the ceramic in a chamber having a non-oxidizing atmosphere, such as argon. An oxidizing gas is then introduced into the chamber at a rate which is sufficiently slow that cracking of the ceramic will not occur.

JP-A-04004043 describes exhaust gas purification catalysts comprising a platinum group metal on a ceramic support of alumina, ceria and zirconia having high oxygen storage capacity.

It is an object of the present invention to provide a method for easily preparing a composite oxide containing cerium oxide, zirconium oxide, and hafnium oxide which exhibits excellent oxygen absorbing and desorbing capability.

According to the present invention, there is provided a method for preparing a composite oxide having oxygen absorbing and desorbing capability comprising the steps of:
providing a starting composite oxide comprising 4.99-98.99% by weight of cerium oxide, 1-95% by weight of zirconium oxide, 0.01-20% by weight of hafnium oxide; and from 0 to 10% by weight of an additional metal oxide selected from titanium oxide, tungsten oxide, nickel oxide, copper oxide, iron oxide, aluminum oxide, silicon oxide, beryllium oxide, magnesium oxide, calcium oxide, strontium oxide, barium oxide, an oxide of a rare earth metal other than cerium, or mixtures thereof;
subjecting said starting composite oxide to heating-deoxidation in the presence of a reducing gas or a reducing agent to give a deoxidized composite oxide; and
subjecting said deoxidized composite oxide to heating-oxidation.

The present invention will be described in more detail with reference to the accompanying drawings, in which:-

Fig. 1 is a graph showing the oxygen absorbing and desorbing capability of the composite oxides synthesized in Examples 1 to 4.

Fig. 2 is a graph showing X-ray diffraction patterns of the composite oxides synthesized in Examples 1, 2, 3 and 4, respectively.

Fig. 3 is a graph showing X-ray diffraction pattern of the composite oxide synthesized in Example 6 and a calculated pattern of the Φ' phase.

Fig. 4 is a graph showing an X-ray diffraction pattern of the composite oxide A synthesized in Example 6 and calculated pattern of the Φ phase.

Fig. 5 is a graph showing the oxygen absorbing and desorbing capability of the composite oxides synthesized in Comparative Examples 1 to 4.

Fig. 6 is a graph showing X-ray diffraction patterns of the composite oxides synthesized in Comparative Examples 1, 2, 3 and 4, respectively.

In the present method, the indispensable constructions is to effect heating-deoxidation and heating-oxidation to a composite oxide containing cerium oxide, zirconium oxide, and hafnium oxide as indispensable components (referred to hereinafter as composite oxide A).

In the above composite oxide A, the proportion of the indispensable components is 4.99-98.99 % by weight of cerium oxide, 1-95 % by weight of zirconium oxide, and 0.01-20 % by weight of hafnium oxide. If the proportion of each component is outside the above-mentioned range, the composite oxide will not be able to display sufficient oxygen absorbing and desorbing capability, thus being not preferred. Further, the composite oxide A contains, in addition to the above indispensable components, from 0 to 10% by weight of an additional metal oxide or oxides such as titanium oxide, tungsten oxide, nickel oxide, copper oxide, iron oxide, aluminum oxide, silicon oxide, beryllium oxide, magnesium oxide, calcium oxide, strontium oxide, barium oxide, oxides of rare earth metals other than cerium, and mixtures thereof. The proportion of the additional metal oxide is 10 % by weight or less based on the total weight of the composite oxide A.

For preparation of the above composite oxide A, a solution containing cerium ion, zirconium ion, hafnium ion, and if necessary, additional metal ions for forming the aforementioned additional metal oxides, are mixed with an aqueous solution of ammonia, ammonium bicarbonate, or oxalic acid to prepare a composite salt precipitate containing at least cerium, zirconium, and hafnium. In this case, the solution containing cerium ion, zirconium ion, and hafnium ion may be prepared, for example, by mixing together an aqueous solution of cerium nitrate and an aqueous solution of zirconium nitrate and hafnium nitrate, or by mixing together an aqueous solution of cerium nitrate, an aqueous solution of zirconium nitrate, and an aqueous solution of hafnium nitrate. Furthermore, in this case, the above aqueous solutions may optionally be mixed with a solution containing titanium ion, tungsten ion, nickel ion, copper ion, iron ion, aluminum ion, silicon ion, beryllium ion, magnesium ion, calcium ion, strontium ion, barium ion, rare earth metal ion other than cerium ion, or mixtures thereof as needed.

The concentration of the solution containing cerium ion, zirconium ion, and hafnium ion is within a range preferably of 30 to 200 g/liter, and more preferably of 50 to 100 g/liter in terms of the composite oxide containing above ions. The mixing ratio of the cerium ion, zirconium ion, hafnium ion, and the additional metal ions optionally admixed therewith is 4.99-98.99 : 1-95 : 0.01-20 : 0-10 in terms of weight ratio of oxides of the respective ions.

The concentration of the aqueous solution of ammonia to be mixed with the solution containing cerium ion, zirconium ion, and hafnium ion is preferably 1-2 N and more preferably 1-1.5 N. The concentration of the aqueous solution of ammonium bicarbonate to be mixed with the solution containing cerium ion, zirconium ion, and hafnium ion is preferably 50 to 200 g/litter and more preferably 100 to 150 g/liter. The concentration of the aqueous solution of oxalic acid to be mixed with the solution containing cerium ion, zirconium ion, and hafnium ion is preferably 50 to 100 g/liter and more preferably 50 to 60 g/liter. The mixing ratio of the solution containing cerium ion, zirconium ion, and hafnium ion to the aqueous solution of ammonia, ammonium bicarbonate, or oxalic acid is preferably 1 : 1 - 1 : 10 by weight ratio. The composite salt precipitate obtained in this case may, for example be a composite hydroxide or a composite carbonate.

Composite oxide A may be produced by calcining the resultant composite salt precipitate at 300 °C or higher, preferably at 300 to 1000 °C for 1 to 10 hours. The composite salt precipitate may also be hydrothermally processed prior to the calcining step. The hydrothermal processing may usually be carried out using an ordinary autoclave or the like device. The temperature and the processing time for the hydrothermal processing are preferably 100 to 135 °C and 0.5 to 1 hour, respectively.

The composite oxide A may also be obtained by the following method. Specifically, for example, cerium oxide, zirconium oxide, and hafnium oxide, or otherwise, cerium oxide and zirconium oxide containing hafnium oxide, and optionally the additional metal oxide are weighed to have a proportion of 4.99-98.99 by weight of cerium oxide, 1-95 by weight of zirconium oxide, 0.01-20 by weight of hafnium oxide, and 0-10 by weight of the additional metal oxide, and are mixed together uniformly. The mixing is effected preferably by an ordinary ball mill and the like device. The uniformly mixed oxides are then molded into pellets in a compression molding device under a pressure of preferably 200 to 1000 kg/cm², and the resultant pellets are sintered under heating at 700 to 1500 °C for 1 to 10 hours. The sintered body is then taken out and crushed by a crusher, such as a ball mill, to have a particle size preferably of 1.0 to 100 µm to give the composite oxide A.

In the present method, the composite oxide A is subsequently subjected to heating-deoxidation in the presence of a reducing gas or a reducing agent. It is preferred that, prior to the heating-deoxidation, impurities deposited on the composite oxide A are removed. The impurities may be removed from the composite oxide A, for example, by charging the composite oxide A in a vacuum heating furnace, introducing an oxygen gas or the like into the furnace after evacuating the inside of the furnace to vacuum, and maintaining the composite oxide therein preferably at 200 to 1000 °C for 0.5 to 10 hours.

The heating-deoxidation may preferably be carried out by charging the composite oxide A in a vacuum heating furnace, introducing a reducing gas, such as hydrogen or carbon monoxide into the furnace after evacuating the inside of the furnace to vacuum, and subsequently heating the composite oxide A preferably at 600 to 1000 °C for 0.5 to 10 hours under the reducing gas atmosphere. In this case, the heating may be carried out in a reducing gas stream as needed. The reducing gas employed may be diluted with an inert gas. In this case, the concentration of the reducing gas diluted with the inert gas is preferably not less than 1 % by volume. Alternatively, the heating-deoxidation may be carried out, for example, by admixing a reducing agent such as carbon powders to the composite oxide A, and subsequently heating the resultant mixture preferably at 800 to 1300 °C for 1 to 10 hours. The mixing amount of the reducing agent is preferably 1 to 1.5 equivalent of the amount of cerium in the composite oxide A.

After the heating-deoxidation, heating-oxidation is carried out for producing the composite oxide having desired excellent oxygen absorbing and desorbing capability according to the present invention.

The heating-oxidation may be carried out by, after the heating-deoxidation, evacuating again the inside of the furnace to vacuum for removing any residual reducing gas, introducing an oxidizing gas, such as air or an oxygen gas into the furnace, and heating the composite oxide in an atmosphere of the oxidizing gas at a temperature of 600 to 850 °C for 0.5 to 10 hours. In this case, the heating may be carried out in a oxidizing gas stream as needed.

The above heating-deoxidation and the heating-oxidation may be repeated two or three times.

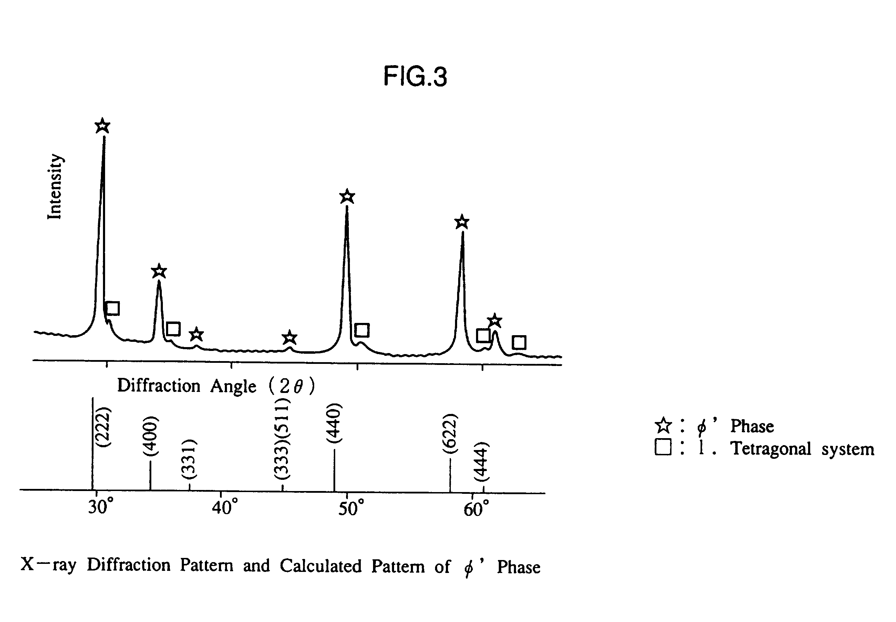

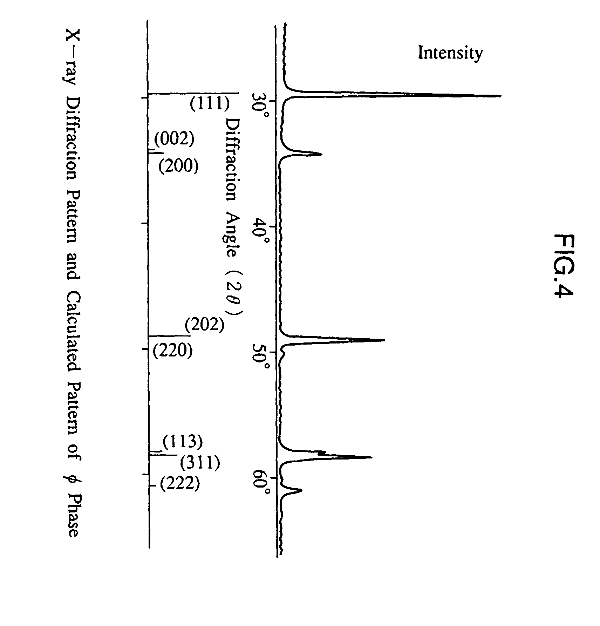

The composite oxide obtained by the present method exhibits oxygen absorbing and desorbing capability of not less than 100 µmol/g, preferably in a range of from 100 µmol/g to 1200 µmol/g, and more preferably 150 µmol/g to 1200 µmol/g at a temperature range of 400 to 700 °C. Such oxygen absorbing and desorbing capability results from changes in valency of cerium in the composite oxide from 4 at the time of fabrication to 3 upon heating under deoxidation conditions, e.g. in a hydrogen stream. The zirconium and hafnium components contained in the composite oxide promote the oxygen absorbing and desorbing capability and the valency of both components is constant at 4, respectively. Among the composite oxides obtained by the present method, a composite oxide having φ' phase, which is a never-reported, novel crystal structure, is occasionally included. This φ' phase is comprised of 8 units of the CaF₂-related structure and has twice as much lattice parameter as crystal structure not having the φ' phase. For example, a lattice parameter of ZrO₂-CeO₂ having no φ' phase is 0.51-0.53 nm, whereas that of ZrO₂-CeO₂ having φ' phase is 1.02-1.06 nm. The φ' phase is a crystal structure showing peaks in the (222), (400), (331), (333), (511), (440), (622), and (444) planes of the calculated X-ray diffraction pattern. The calculation of X-ray diffraction pattern is generally described in B. D. Cullity "Summary of X-Ray Diffraction, New Edition" issued from KK AGNE and translated by Gentaro Matsumura (1983). However, in identifying this φ' phase, it may occur that the peak values of the (331), (333), and (511) planes in the X-ray diffraction pattern are small depending on the composition such that the peaks in these planes do not appear clearly in case of weak sensitivity in the X-ray diffraction pattern. Without the presence of these peaks, the φ' phase can be identified by the other large peaks mentioned above. Although a tetragonal φ phase (V. Longo and D. Minichelli : J. Amer, Ceramic Soc., 56 (1973), 600.;P. Duran, M. Gonzzalez, C. Moure, J. R. Jurado and C. Pascual: J. Materials Sci., 25 (1990), 5001.) is known as an analogous phase, this φ phase is found to be different from the φ' phase as will become apparent by comparing the X-ray diffraction pattern and the calculated X-ray diffraction pattern shown in Fig. 3 with those of Fig. 4 as explained subsequently.

According to the present method, superior oxygen absorbing and desorbing capability can easily be rendered to a composite oxide containing cerium, zirconium, and hafnium compared to the conventional cerium oxide and cerium-zirconium composite oxide, by subjecting the composite oxide to heating-deoxidation and heating-oxidation. The resulting composite oxide is highly useful in the fields of catalysts and functional ceramics.

### EXAMPLES OF THE INVENTION

The present invention will now be explained in more detail with reference to Examples and Comparative Examples hereinbelow, which are merely illustrative and not intended for limiting the present invention.

### Example 1

97 ml of an aqueous solution of cerium nitrate prepared by dissolving high purity cerium nitrate solution (manufactured by SANTOKU METAL INDUSTRY CO., LTD. with a purity of 99.9 %) in water to have a concentration of 300 g/liter in terms of cerium oxide were mixed with 55 ml of an aqueous solution of zirconium nitrate prepared by dissolving zirconium nitrate solution prepared by dissolving zirconium nitrate solution(manufactured by DAIICHI KIGENSO KAGAKU KOGYO CO., LTD. with a purity of 99.9 %) in water to have a concentration of 25 % by weight in terms of zirconium oxide and 24 ml of an aqueous solution of hafnium nitrate prepared by dissolving hafnium nitrate solution (manufactured by WAKO PURE CHEMICAL INDUSTRIES, LTD. with a purity of 97 %) in water to have a concentration of 10 g/liter in terms of hafnium oxide, thereby preparing a solution containing cerium ion, zirconium ion, and hafnium ion having the Ce : Zr : Hf weight ratio of 89.7 : 10 : 0.3 and the concentration of 50 g/liter in terms of the composite oxide. To 1 liter of the resultant solution was then added 1 liter of a separately prepared aqueous solution of ammonium bicarbonate having a concentration of 150 g/ liter to give a precipitate of a composite carbonate containing cerium, zirconium, and hafnium. The resultant composite carbonate was calcined at 300 °C for 5 hours to yield 50 g of a composite oxide containing cerium, zirconium, and hafnium.

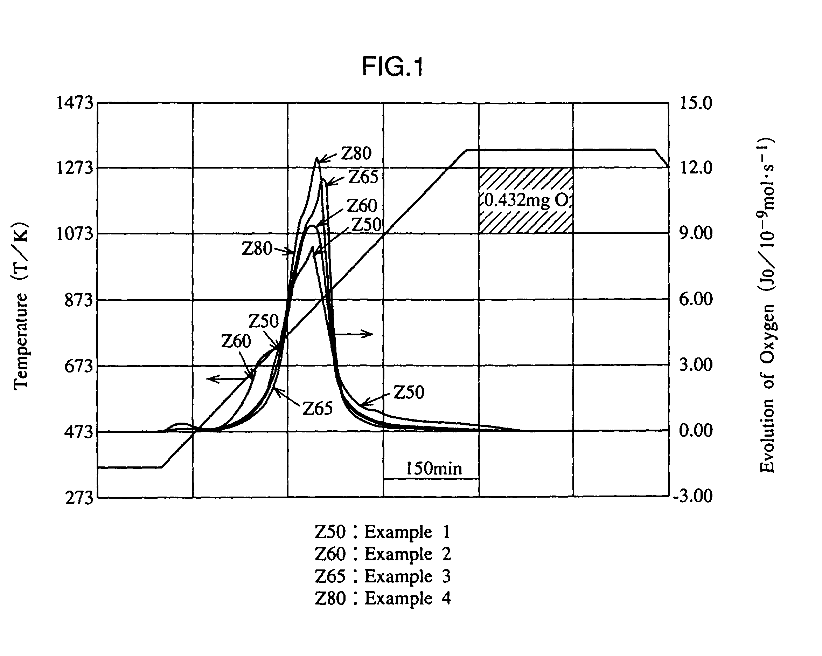

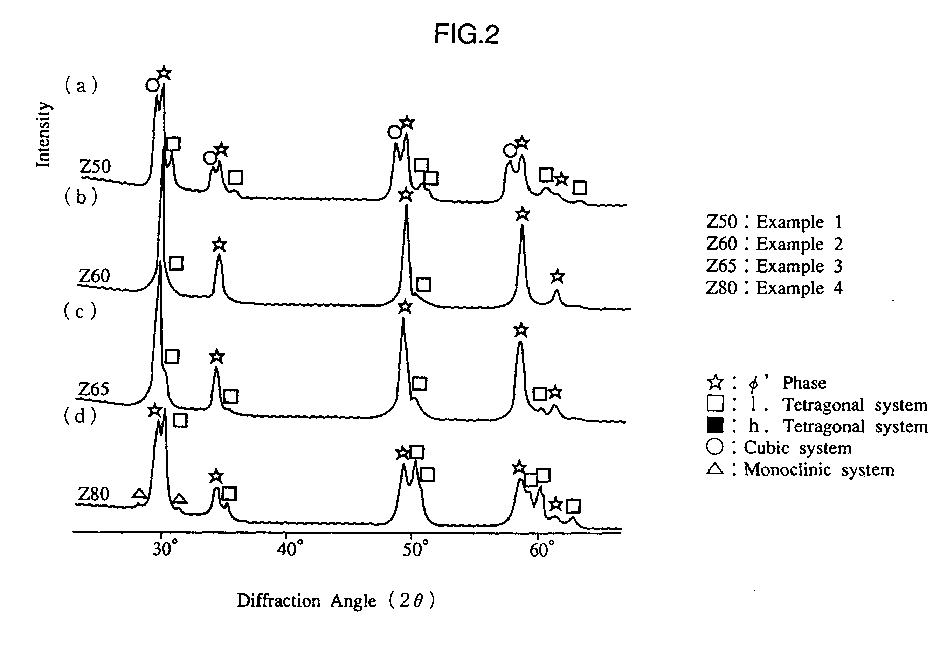

The composite oxide A was charged in a vacuum heating furnace which was then evacuated to vacuum. The composite oxide A was then heated to and maintained at 900 °C for one hour as a pure oxygen gas was introduced into the furnace for removing impurities affixed thereto. After the temperature was lowered to 100 °C, the furnace was again evacuated to vacuum to remove oxygen gas. The composite oxide A was heated at 1000 °C for 5 hours as an argon gas-diluted 10 % hydrogen gas was introduced into the furnace. After the temperature was lowered to 600 °C, the furnace was evacuated to vacuum. The composite oxide A was then heated at 600 °C for 5 hours as the oxygen gas was introduced into the furnace for synthesizing the composite oxide. The oxygen absorbing and desorbing properties of the produced composite oxide were then measured using an electro-chemical oxygen pump type closed-system oxygen analyzer disclosed in Shinya Yao and Zensaku Kozuka, "Detection of the Phase Transitions of Praseodymium Oxide Thin Film by a Closed-System Potentiostatic Technique Employing a Solid Electrolyte", Journal of the Electro-Chemical Society of Japan, 61 No. 2, P262 (1993). The results are shown in Fig. 1 (see Z50). The values of the absorbed and desorbed quantities of oxygen as read from Fig. 1 are shown in Table 1. Analyses of the crystal structure of the produced composite oxide with an X-ray diffraction apparatus manufactured by SHIMADZU CORP., revealed that the crystal structure had φ' phase. The results are shown in Fig. 2 (see (a), Z50). Measurements of the composition of the produced composite oxide indicated the composition of 58.16 % by weight of cerium oxide, 41.35 % by weight of zirconium oxide, and 0.49 % by weight of hafnium oxide.

### Example 2

A composite oxide was produced in the same way as in Example 1 except changing the composition of the starting components so that the composition of the composite oxide was 48.10 % by weight of cerium oxide, 51.30 % by weight of zirconium oxide, and 0.60 % by weight of hafnium oxide. The results are shown in Figs. 1 and 2 (see Z60 in Fig. 1 and (b) Z60 in Fig. 2) and in Table 1, as in Example 1.

### Example 3

21.4 g of cerium oxide (manufactured by SANTOKU METAL INDUSTRY CO., LTD. with a purity of 99.9 %) was mixed with 28.6 g of zirconium oxide containing 1.17 % by weight of hafnium oxide (manufactured by SANTOKU METAL INDUSTRY CO., LTD. with a purity of zirconium oxide of 98.83 % by weight) in a ball mill, and compression-molded by a compression molding device under a molding pressure of 500 kg/cm² to give pellets. The resultant pellets were then sintered in atmosphere at 1500 °C for 5 hours, and subsequently crushed in a ball mill to give a composite oxide A. The resultant composite oxide A was charged in a vacuum heating furnace, which was then evacuated to vacuum, as in Example 1. The composite oxide A was then heated to and maintained at 900 °C for 1 hour as a pure oxygen gas was introduced into the furnace for removing impurities affixed thereto. After the temperature was lowered to 100 °C, the furnace was again evacuated to vacuum to remove oxygen gas. The composite oxide A was then heated at 1000 °C for 5 hours as an argon gas-diluted 10 % hydrogen gas was introduced into the furnace. After the temperature was lowered to 600 °C, the furnace was evacuated to vacuum. The composite oxide A was then heated at 600 °C for 5 hours as the oxygen gas was introduced into the furnace for synthesizing the composite oxide.

The oxygen absorbing and desorbing properties of the produced composite oxide were measured as in Example 1. The values of the absorbed and desorbed quantities of oxygen as read from Fig. 1 are shown in Table 1. Analyses of the crystal structure conducted in the same way as in Example 1, indicated the presence of φ' phase. The results are shown in Fig. 2 (see (c), Z65). Measurements of the composition of the produced composite oxide indicated the composition of 42.81 % by weight of cerium oxide, 56.52 % by weight of zirconium oxide, and 0.67 % by weight of hafnium oxide.

### Example 4

A composite oxide was produced in the same way as in Example 3 except changing the composition of the starting components so that the composition of the composite oxide was 25.79 % by weight of cerium oxide, 73.35 % by weight of zirconium oxide, and 0.86 % by weight of hafnium oxide. The results are shown in Figs. 1 and 2 (see Z80 in Fig. 1 and (d), Z80 in Fig. 2) and in Table 1, as in Example 3.

### Example 5

79 ml of an aqueous solution of cerium nitrate prepared in Example 1 were mixed with 68 ml of an aqueous solution containing zirconium nitrate prepared by dissolving zirconium nitrate solution containing 1.17 % by weight of hafnium based on the total weight of zirconium in water to have a concentration of 25 % by weight in terms of zirconium oxide and 8 ml of an aqueous solution of yttrium nitrate prepared by dissolving yttrium nitrate (manufactured by SANTOKU METAL INDUSTRY CO., LTD. with a purity of 99.9 %) in water to have a concentration of 100 g/liter in terms of yttrium oxide, thereby preparing a solution containing cerium ion, zirconium ion, hafnium ion, and yttrium ion having the Ce : Zr : Hf : Y weight ratio of 49.9 : 47.8 : 0.7 : 1.6 and the concentration of 50 g/liter in terms of the composite oxide. Then the resultant solution was processed in the same manner as in Example 1 to obtain 50 g of composite oxide A.

The composite oxide A was charged in a vacuum heating furnace, which was then evacuated to vacuum. The composite oxide A was then heated to and maintained at 900 °C for 1 hour as a pure oxygen gas was introduced into the furnace for removing impurities affixed thereto. After the temperature was lowered to 100 °C, the furnace was again evacuated to vacuum to remove oxygen gas. The composite oxide A was then heated at 900 °C for 5 hours as an argon gas-diluted 10 % hydrogen gas was introduced. After the temperature was lowered to 600 °C, the furnace was evacuated to vacuum. The composite oxide A was then heated at 600 °C for 5 hours as the oxygen gas was introduced into the furnace for synthesizing the composite oxide.

The oxygen absorbing and desorbing properties of the produced composite oxide was measured in the same manner as in Example 1. The results are shown in Table 1. The composition of the produced composite oxide was 47.63 % by weight of cerium oxide, 50.20 % by weight of zirconium oxide, 0.59 % by weight of hafnium oxide, and 1.58 % by weight of yttrium oxide.

### Example 6

24.0 g of cerium oxide (manufactured by SANTOKU METAL INDUSTRY CO., LTD. with a purity of 99.9 %) was mixed with 25.6 g of zirconium oxide containing 1.17 % by weight of hafnium oxide (manufactured by SANTOKU METAL INDUSTRY CO., LTD. with a purity of zirconium oxide of 98.83 % by weight) and 0.4 g of commercially available calcium oxide (purity of 99.9 %) in a ball mill, and compression-molded by a compression molding device under a molding pressure of 500 kg/cm² to give pellets. The resultant pellets were then sintered in atmosphere at 1500 °C for 5 hours, and subsequently crushed in a ball mill to give a composite oxide A. The composite oxide A was charged in a vacuum heating furnace, which was then evacuated to vacuum. The composite oxide A was then heated to and maintained at 900 °C for 1 hour as a pure oxygen gas was introduced into the furnace for removing impurities affixed thereto. After the temperature was lowered to 100 °C, the furnace was again evacuated to vacuum to remove oxygen gas. The composite oxide A was then heated at 1000 °C for 5 hours as an argon gas-diluted 10 % hydrogen gas was introduced. After the temperature was lowered to 600 °C, the furnace was evacuated to vacuum. The composite oxide A was then heated at 600 °C for 5 hours as the oxygen gas was introduced into the furnace for synthesizing the composite oxide.

The oxygen absorbing and desorbing properties of the produced composite oxide were measured in the same way as in Example 1. Analyses of the crystal structure conducted in the same way as in Example 1 showed the presence of the φ' phase. The results are shown in Fig. 3. For the purpose of comparison, composite oxide A was subjected to X-ray diffraction, which showed the presence of the φ phase, without indicating the presence of the φ' phase." The results are shown in Fig. 4. Comparison of Fig. 3 with Fig. 4 revealed that the φ' phase was different from the φ phase. The composition of the composite oxide was 48.02 % by weight of cerium oxide, 50.60 % by weight of zirconium oxide, 0.59 % by weight of hafnium oxide, and 0.79 % by weight of calcium oxide.

### Comparative Examples 1 and 2

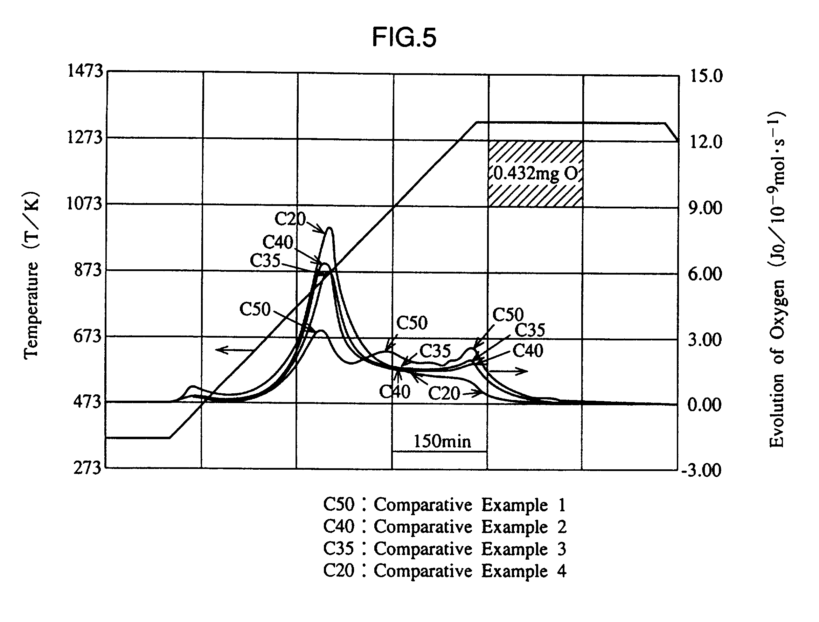

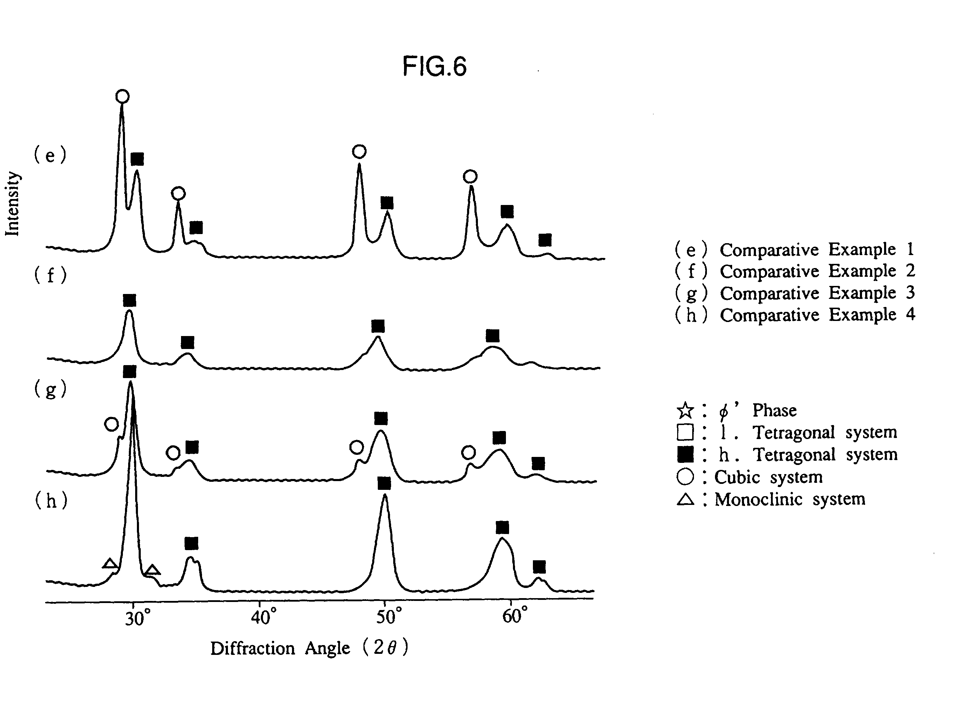

Composite oxides were prepared in the same manner as in Examples 1 and 2, respectively except that neither the heating-deoxidation nor the heating-oxidation was effected. X-ray diffraction and measurements of oxygen absorbing and desorbing properties of the produced composite oxides were measured in the same manner as in Example 1, respectively. The results are shown in Figs. 5 and 6 (see C50 and C40 in Fig. 5 and (e) and (f) in Fig. 6), and in Table 1.

### Comparative Examples 3 and 4

Composite oxides were prepared in the same manner as in Examples 3 and 4, respectively except that neither the heating-deoxidation nor the heating-oxidation was effected. The X-ray diffraction and oxygen absorbing and desorbing properties of the produced composite oxides were measured in the same manner as in Example 3, respectively. The results are shown in Figs. 5 and 6 (see C35 and C20 in Fig. 5 and (g) and (h) in Fig. 6), and in Table 1.

**Table 1**

| | Composition (wt. % of oxide) | | | | | Oxygen absorbing and desorbing capability Oxygen µmol/g |
|---|---|---|---|---|---|---|
| | Ce | Zr | Hf | Ca | Y | |
| Example 1 | 58.16 | 41.35 | 0.49 | | | 1,112 |
| Example 2 | 48.10 | 51.30 | 0.60 | | | 1,073 |
| Example 3 | 42.81 | 56.52 | 0.67 | | | 1,009 |
| Example 4 | 25.79 | 73.35 | 0.86 | | | 638 |
| Example 5 | 47.63 | 50.20 | 0.59 | | 1.58 | 1,053 |
| Example 6 | 48.02 | 50.60 | 0.59 | 0.79 | | 1,071 |
| Comp. Ex. 1 | 58.16 | 41.35 | 0.49 | | | 463 |
| Comp. Ex. 2 | 48.10 | 51.30 | 0.60 | | | 655 |
| Comp. Ex. 3 | 42.81 | 56.52 | 0.67 | | | 516 |
| Comp. Ex. 4 | 25.79 | 73.35 | 0.86 | | | 408 |

## Claims

1. A method for preparing a composite oxide having oxygen absorbing and desorbing capability comprising the steps of:
providing a starting composite oxide comprising 4.99-98.99% by weight of cerium oxide, 1-95% by weight of zirconium oxide, 0.01-20% by weight of hafnium oxide; and from 0 to 10% by weight of an additional metal oxide selected from titanium oxide, tungsten oxide, nickel oxide, copper oxide, iron oxide, aluminum oxide, silicon oxide, beryllium oxide, magnesium oxide, calcium oxide, strontium oxide, barium oxide, an oxide of rare earth metal other than cerium, or mixtures thereof;
subjecting said starting composite oxide to heating-deoxidation in the presence of a reducing gas or a reducing agent to give a deoxidized composite oxide; and
subjecting said deoxidized composite oxide to heating-oxidation.

2. The method as claimed in claim 1, wherein said step of subjecting said starting composite oxide to heating-deoxidation comprises heating said starting composite oxide at 600-1000°C for 0.5-10 hours in the presence of the reducing gas or reducing agent.

3. The method as claimed in claim 1, wherein said step of subjecting said starting composite oxide to heating-deoxidation comprises the steps of admixing a reducing agent to said starting composite oxide to give a mixture, and heating said mixture at 800-1300°C for 1-10 hours.

4. The method as claimed in claim 1, wherein said step of subjecting said deoxidized composite oxide to heating-oxidation comprises heating said deoxidized composite oxide at 600-850°C for 0.5 to 10 hours under oxidizing atmosphere.

5. The method as claimed in claim 1, wherein said steps of subjecting said starting composite oxide to heating-deoxidation and subjecting said deoxidized composite oxide to heating-oxidation are repeated two or three times.

6. The method as claimed in claim 1, wherein said step of providing a starting composite oxide comprising cerium oxide, zirconium oxide, and hafnium oxide comprises the steps of mixing a first solution containing cerium ion, zirconium ion, and hafnium ion with a second solution selected from the group consisting of an aqueous solution of ammonia, an aqueous solution of ammonium bicarbonate, and an aqueous solution of oxalic acid to prepare a composite salt precipitate containing cerium, zirconium, and hafnium, and calcining said precipitate at a temperature of at least 300°C.

7. The method as claimed in claim 1, wherein said step of providing a starting composite oxide comprising cerium oxide, zirconium oxide, hafnium oxide and optional additional metal oxide comprises the steps of mixing uniformly cerium oxide, zirconium oxide, and hafnium oxide to give a mixture, molding said mixture to give a pellet, sintering said pellet, and pulverizing said pellet.

8. The method as claimed in claim 6, wherein said first solution further comprises an additional metal ion selected from titanium ion, tungsten ion, nickel ion, copper ion, iron ion, aluminum ion, silicon ion, beryllium ion, magnesium ion, calcium ion, strontium ion, barium ion, rare earth metal ion other than cerium ion, or mixtures thereof, whereby said composite salt precipitate contains said additional metal ion.

9. The method as claimed in claim 7, wherein said step of mixing includes mixing said additional metal oxide with said cerium oxide, zirconium oxide and hafnium oxide.

10. The method as claimed in claim 1, wherein said reducing gas is selected from hydrogen, carbon monoxide, hydrogen diluted with an inert gas, or carbon monoxide diluted with an inert gas.

## Patentansprüche

1. Verfahren zum Herstellen eines Mischoxides, das Sauerstoffabsorptions- und Sauerstoffdesorptionseigenschaften aufweist, mit den folgenden Schritten: Vorsehen eines Ausgangsmischoxides, das 4,99-98,99 Gew % von Ceroxid, 1-95 Gew % Zirkonoxid, 0,01-20 Gew % Hafniumoxid und 0-10 Gew % eines zusätzlichen Metalloxides enthält, das aus Titanoxid, Wolframoxid, Nickeloxid, Kupferoxid, Eisenoxid, Aluminiumoxid, Siliciumoxid, Berylliumoxid, Magnesiumoxid, Calciumoxid, Strontiumoxid, Bariumoxid, einem Oxid eines anderen Seltenerdmetalles als Cer oder Gemischen hiervon ausgewählt ist;
Unterziehen des Ausgangsmischoxides einer Erhitzungs-Desoxidation in Gegenwart eines reduzierenden Gases oder eines reduzierenden Mittels, um ein desoxidiertes Mischoxid zu erhalten; und
Unterziehen des desoxidierten Mischoxides einer Erhitzungs-Oxidation.

2. Verfahren nach Anspruch 1, bei dem der Schritt des Unterziehens des Ausgangsmischoxides einer Erhitzungs-Desoxidation das Erhitzen des Ausgangsmischoxides auf 600-1000°C über 0,5-10 h in Gegenwart des reduzierenden Gases oder reduzierenden Mittels umfaßt.

3. Verfahren nach Anspruch 1, bei dem der Schritt des Unterziehens des Ausgangsmischoxides einer Erhitzungs-Desoxidation die Schritte des Vermischens des Ausgangsmischoxides mit einem reduzierenden Mittel, um ein Gemisch zu erhalten, und des Erhitzens des Gemisches auf 800-1300°C über 1-10 h umfaßt.

4. Verfahren nach Anspruch 1, bei dem der Schritt des Unterziehens des desoxidierten Mischoxides einer Erhitzungs-Oxidation das Erhitzen des desoxidierten Mischoxides auf 600-850°C über 0,5-10 h unter einer oxidierenden Atmosphäre umfaßt.

5. Verfahren nach Anspruch 1, bei dem die Schritte des Unterziehens des Ausgangsmischoxides einer Erhitzungs-Desoxidation und des Unterziehens des desoxidierten Mischoxides einer Erhitzungs-Oxidation zwei oder dreimal wiederholt werden.

6. Verfahren nach Anspruch 1, bei dem der Schritt des Vorsehens eines Ausgangsmischoxides, das Ceroxid, Zirkonoxid und Hafniumoxid enthält, die Schritte des Vermischens einer ersten Lösung, die Cerionen, Zirkonionen und Hafniumionen enthält, mit einer zweiten Lösung, die aus der Gruppe ausgewählt ist, die aus einer wässrigen Lösung von Ammoniak, einer wässrigen Lösung von Ammoniumbikarbonat und einer wässrigen Lösung von Oxalsäure besteht, um eine Cer, Zirkon und Hafnium enthaltende Mischsalzausfällung herzustellen, und des Kalzinierens der Ausfällung bei einer Temperatur von mindestens 300°C umfaßt.

7. Verfahren nach Anspruch 1, bei dem der Schritt des Vorsehens eines Ausgangsmischoxides, das Ceroxid, Zirkonoxid, Hafniumoxid und wahlweise ein zusätzliches Metalloxid enthält, die Schritte des gleichmäßigen Vermischens von Ceroxid, Zirkonoxid und Hafniumoxid zum Erhalt eines Gemisches, des Formens des Gemisches zur Ausbildung eines Pellets, des Sinterns des Pellets und des Pulverisierens des Pellets umfaßt.

8. Verfahren nach Anspruch 6, bei dem die erste Lösung des weiteren ein zusätzliches Metallion umfaßt, das aus Titanionen, Wolframionen, Nickelionen, Kupferionen, Eisenionen, Aluminiumionen, Siliciumionen, Berylliumionen, Magnesiumionen, Calciumionen, Strontiumionen, Bariumionen, anderen Seltenerdmetallionen als Cerionen oder Gemischen hiervon ausgewählt ist, wodurch die Mischsalzausfällung das zusätzliche Metallion enthält.

9. Verfahren nach Anspruch 7, bei dem der Schritt des Vermischens das Vermischen des zusätzlichen Metalloxides mit dem Ceroxid, Zirkonoxid und Hafniumoxid umfaßt.

10. Verfahren nach Anspruch 1, bei dem das reduzierende Gas aus Wasserstoff, Kohlenmonoxid, mit einem Inertgas verdünnten Wasserstoff oder mit einem Inertgas verdünnten Kohlenmonoxid ausgewählt ist.

## Revendications

1. Procédé de préparation d'un oxyde composite capable d'absorber et de désorber l'oxygène, comprenant les étapes consistant à :
fournir un oxyde composite de départ comprenant de 4,99 à 98,99 % en poids d'oxyde de cérium, de 1 à 95 % en poids d'oxyde de zirconium, de 0,01 à 20 % en poids d'oxyde de hafnium ; et de 0 à 10 % en poids d'un oxyde métallique supplémentaire choisi dans le groupe comprenant l'oxyde de titane, l'oxyde de tungstène, l'oxyde de nickel, l'oxyde de cuivre, l'oxyde de fer, l'oxyde d'aluminium, l'oxyde de silicium, l'oxyde de béryllium, l'oxyde de magnésium, l'oxyde de calcium, l'oxyde de strontium, l'oxyde de baryum, un oxyde de terre rare autre que le cérium, ou des mélanges de ceux-ci ;
soumettre ledit oxyde composite de départ à une désoxydation par chauffage en présence d'un gaz réducteur ou d'un agent réducteur afin de donner un oxyde composite désoxydé ; et
soumettre ledit oxyde composite désoxydé à une oxydation par chauffage.

2. Procédé selon la revendication 1, dans lequel ladite étape consistant à soumettre ledit oxyde composite de départ à une désoxydation par chauffage consiste à chauffer ledit oxyde composite de départ à une température de 600 à 1000 °C pendant 0,5 à 10 heures en présence du gaz réducteur ou de l'agent réducteur.

3. Procédé selon la revendication 1, dans lequel ladite étape consistant à soumettre ledit oxyde composite de départ à une désoxydation par chauffage consiste à incorporer par mélangeage un agent réducteur dans ledit oxyde composite de départ afin d'obtenir un mélange et chauffer ledit mélange à une température de 800 à 1300 °C pendant 1 à 10 heures.

4. Procédé selon la revendication 1, dans lequel ladite étape consistant à soumettre ledit oxyde composite désoxydé à une oxydation par chauffage consiste à chauffer ledit oxyde composite désoxydé à une température de 600 à 850 °C pendant 0,5 à 10 heures sous une atmosphère oxydante.

5. Procédé selon la revendication 1, dans lequel lesdites étapes consistant à soumettre ledit oxyde composite de départ à une désoxydation par chauffage et à soumettre ledit oxyde composite désoxydé à une oxydation par chauffage sont répétées deux ou trois fois.

6. Procédé selon la revendication 1, dans lequel ladite étape consistant à fournir un oxyde composite de départ comprenant de l'oxyde de cérium, de l'oxyde de zirconium et de l'oxyde de hafnium comprend les étapes consistant à mélanger une première solution contenant des ions de cérium, des ions de zirconium et des ions de hafnium avec une deuxième solution choisie dans le groupe comprenant une solution aqueuse d'ammoniaque, une solution aqueuse de bicarbonate d'ammonium et une solution aqueuse d'acide oxalique afin de préparer un précipité de sel composite contenant du cérium, du zirconium et du hafnium, et à calciner ledit précipité à une température d'au moins 300 °C.

7. Procédé selon la revendication 1, dans lequel ladite étape consistant à fournir un oxyde composite de départ comprenant de l'oxyde de cérium, de l'oxyde de zirconium, de l'oxyde de hafnium et un oxyde métallique supplémentaire facultatif comprenant les étapes consistant à mélanger uniformément de l'oxyde de cérium, de l'oxyde de zirconium et de l'oxyde de hafnium afin d'obtenir un mélange, à mouler ledit mélange pour obtenir une pastille, à fritter ladite pastille et à pulvériser ladite pastille.

8. Procédé selon la revendication 6, dans lequel ladite première solution comprend en plus un ion métallique supplémentaire choisi dans le groupe comprenant l'ion de titane, l'ion de tungstène, l'ion de nickel, l'ion de cuivre, l'ion de fer, l'ion d'aluminium, l'ion de silicium, l'ion de béryllium, l'ion de magnésium, l'ion de calcium, l'ion de strontium, l'ion de baryum, un ion de terre rare autre que le cérium, ou des mélanges de ceux-ci, grâce à quoi ledit précipité de sel composite contient ledit ion métallique supplémentaire.

9. Procédé selon la revendication 7, dans lequel ladite étape de mélangeage consiste à mélanger ledit oxyde métallique supplémentaire avec lesdits oxyde de cérium, oxyde de zirconium et oxyde de hafnium.

10. Procédé selon la revendication 1, dans lequel ledit gaz réducteur est choisi dans le groupe comprenant l'hydrogène, le monoxyde de carbone, l'hydrogène dilué avec un gaz inerte, ou le monoxyde de carbone dilué avec un gaz inerte.
